## Europäisches Patentamt

## European Patent Office

## Office européen des brevets

(19)

(11) Publication number: **0 196 293**
**B1**

(12) # EUROPEAN PATENT SPECIFICATION

(45) Date of publication of patent specification: **12.09.90**

(51) Int. Cl.⁵: **F 23 G 7/04**

(21) Application number: **84903590.2**

(22) Date of filing: **18.09.84**

(86) International application number:
**PCT/US84/01482**

(87) International publication number:
**WO 86/01875 27.03.86 Gazette 86/07**

(54) **BURNER AND INCINERATOR SYSTEM FOR LIQUID WASTE.**

(43) Date of publication of application:
**08.10.86 Bulletin 86/41**

(45) Publication of the grant of the patent:
**12.09.90 Bulletin 90/37**

(84) Designated Contracting States:
**AT BE CH DE FR GB LI LU NL SE**

(56) References cited:
**US-A-3 828 700**
**US-A-4 206 711**
**US-A-4 351 252**
**US-A-4 475 466**

(73) Proprietor: **PYROCHEM, INC.**
**4016 Shelbyville Road Suite 203**
**Louisville, KY 40207 (US)**

(72) Inventor: **GRAVELY, David, A.**
**7319 Manslick Road**
**Louisville, KY 40214 (US)**

(74) Representative: **Allam, Peter Clerk et al**
**LLOYD WISE, TREGEAR & CO. Norman House**
**105-109 Strand**
**London WC2R 0AE (GB)**

Courier Press, Leamington Spa, England.

## Description

Technical field

This invention relates to processes and systems for disposing of waste materials, and more particularly to processes and systems for disposing of liquid wastes by combustion.

Background of the invention

A continuing problem in many industrial processes is the disposal of industrially generated wastes. Pollution control laws prohibit the disposal of waste materials in ways which contaminate the environment. Consequently, the discharge of many gaseous products and particulate materials to the atmosphere, the discharge of liquid and solid waste into bodies of water, and even the disposal of liquids and solids on land are restricted. A desirable and convenient way to dispose of wastes is to destroy them by complete combustion of the wastes. Disposal by combustion is especially useful and potentially economical for wastes which are at least in part combustible. Substantially complete combustion requires a heating or energy value for liquid waste of at least about $2.51 \times 10^7$ J per litre (90,000 BTU per gallon), and air in the amount of at least about 3.2 kg per $1 \times 10^7$ J (7.5 pounds per 10,000 BTU).

Many residues are not completely converted to innocuous substances when burned in the open, and many devices and processes have been suggested for disposing of waste by combustion processes. However, the burning of many wastes presents problems. EPA regulations require 99.9 percent combustion efficiency together with a minimum burning temperature and retention time at burning temperature for combusting hazardous wastes. In order for these requirements to be met, it is necessary for the waste to burn with consistent heat values and burning characteristics. However, many wastes comprise a mixture of various substances, and may comprise mixtures of liquids and solids, the components of which have heating values from about zero to very high levels. The waste may comprise a mixture of components having different specific gravities such that these components separate upon standing. Further, different liquid fractions may have different viscosities and/or concentrations of solids. Highly viscous liquids, and liquids containing solids, can plug burner nozzles, stopping the flow of combustible liquids and causing the flame to go out. Further, many wastes contain a sufficient amount of water so that they are incapable of supporting combustion. While such liquids can be mixed with liquids having a high enough energy value so that the mixture is combustible, the aqueous phase tends to separate from the mixture. This solution, i.e. that of adding a sufficient amount of high energy content liquid to make a combustible mixture, is inefficient in its use of the heating value of the waste.

US—A—3828700 discloses a burner for combustion of liquid wastes which comprises wall means defining a combustion zone, injection means comprising first and second injectors for separately injecting liquid sprays into the combustion zone, gas supply means for supplying a primary combustion-supporting gas to the combustion zone, means for igniting the injected waste streams within the combustion zone, and means for emission of combustion products from the combustion zone, the injection means comprising injectors positioned in spaced apart relationship to each other. In this prior system, a high BTU content combustible substance is continuously introduced into the combustion zone in order to sustain the combustion of non-combustible or substantially non-combustible waste liquids which are injected into the combustion zone through the other injectors. It is therefore necessary that the BTU content of the combustible substance must be carefully monitored in order that the combustion should be sustained, and of course the energy content must be maintained at a high level, which usually means that even if the combustible substance comprises a combustible waste liquid it must usually be supplemented with an auxiliary fuel. In such a system, also, it is difficult to maintain a constant energy value in a feed system formed by mixing as confined liquids a combustible component with a non-combustible component.

The present invention seeks to provide an improved system for the combustion of liquid wastes.

In accordance with one aspect, the present invention provides a burner for combustion of liquid wastes comprising: wall means (33) defining a combustion zone (33'); injection means comprising first (28), second (27) and third (26) injectors for separately injecting streams of waste liquid into said combustion zone; means (4—18, 22—15) for introducing first (1), second (2) and third (3) waste liquids of different energy values to said first (28), second (27) and third (26) injectors, respectively, said first waste liquid having an energy value below that required for combustion, said second waste liquid having an energy value at least high enough to support combustion, said third waste liquid having an energy value significantly greater than said second waste liquid; gas supply means (34) for supplying a primary combustion-supporting gas to said combustion zone; means (29) for igniting the injected waste streams within said combustion zone (33'), and means (39) for emission of combustion products from said combustion zone (33'); wherein said first (28), second (27) and third (26) injectors are positioned in spaced apart relationship to each other outside said combustion zone (33') and oriented relative to each other and said wall means (33) so that said streams of waste liquids are injected into the combustion zone as separate unconfined streams (119) converging toward a common point (40) within said combustion zone (33'), the axes of said unconfined streams lying on a common surface defined by an imaginary cone having its apex coincident with said common point (40), whereby said waste liquids are mixed in the immediate area of said common point (40) and the mixed waste liquids then move as a stream confined by said wall means (33) towards said emission means (39); and wherein the burner further comprises control means (101) for controlling the rate of injecting at least one of said first (1) and third (3) waste liquids relative to the rate of injecting the other of said first (1) and third (3) waste liquids so that said confined stream is a combustible mixture of said waste liquids which when ignited by said igniting means (29) sustains combustion within said combustion zone (33') independently of said igniting means (29), said control means (101) including means (41, 42, 106) for measuring at least one characteristic of the combustion products related to combustion conditions and means (19, 21) responsive to said characteristic(s) for controlling said rate of injecting at least one of said first (1) and third (3) waste liquids into said combustion zone (33').

The present invention also provides a process for burning liquid wastes, comprising:

providing a first liquid waste having an energy value below that required for combustion, a second liquid waste having an energy value sufficiently high to support combustion, and a third liquid waste having an energy value significantly greater than that of said second liquid waste;

separately injecting said first, second and third liquid wastes into a combustion zone as separate unconfined streams converging toward a common point within said combustion zone, said streams being injected along axes lying substantially on a common surface defined by an imaginary cone having its apex coincident with said common point and being directed toward said common point from outside of said combustion zone and oriented so as to form a mixture of said liquid wastes in the immediate area of said common point;

adjusting the rate of flow of at least one of said first and third streams so that said liquid waste mixture is combustible;

introducing combustion-supporting gas into said combustion zone;

igniting said liquid waste mixture;

measuring at least one characteristic of the combustion products; and,

controlling the rate of flow of at least one of said first and third streams in response to said measured characteristic(s).

By means of the present invention, substantially complete combustion, i.e. at least 99.9 percent complete combustion, can be achieved by maintaining control over (1) amount of combustion-supporting gas, (2) temperature of combustion, and (3) retention time of combustion products at combustion temperatures.

In carrying out this invention different waste materials may be stored separately in accordance with their BTU content, and a stream of each is introduced separately into the combustion zone of the burner, thus avoiding problems arising when liquids are mixed externally before being fed to a combustion zone. Further, means are provided for monitoring conditions within the combustion zone which, together with means responsive to these conditions for adjusting one or more flow rates, produces a stable flame even though one or more of the waste streams changes in composition.

In the preferred method of carrying out this invention each liquid stream is forced from the injector with a high pressure gas which atomizes the liquid upon its emission from the injector nozzle. The extremely fine droplets which are produced and more rapidly and completely combusted than are larger droplets.

The combustion system of this invention is capable of exceeding the combustion temperature and retention time at combustion temperature required by regulation for wastes such as polychlorinatedbiphenyl (PCB) and pathogens.

Brief description of the drawings

Fig. 1 is a schematic diagram of a complete liquid waste system employing the burner of this invention.

Fig. 2 is a view in perspective of the burner of this invention.

Fig. 3 is a vertical sectional view of the refractory insert for the burner.

Fig. 4 is a schematic diagram of a burner injector.

Fig. 5 is a schematic diagram showing the burner face plate and a control system for regulating waste flow to the burner injectors.

Detailed description of the drawings

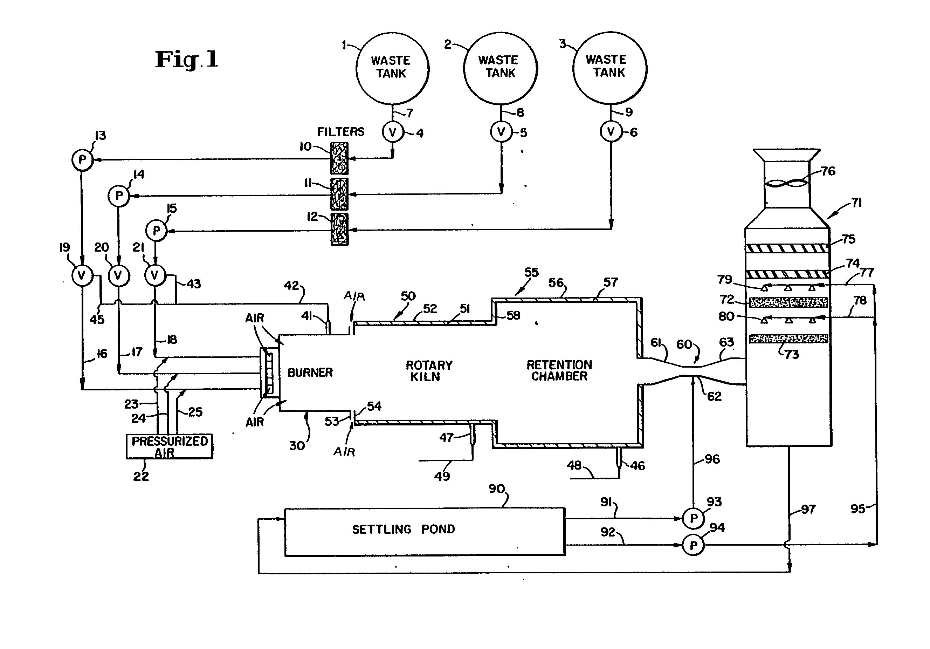

Referring to Fig. 1, waste tanks 1, 2 and 3 represent sources of three different liquid wastes, tank 1 containing liquid waste having too low a heating value to support combustion, tank 2 containing liquid waste having a heating value just capable of supporting combustion, and tank 3 containing liquid waste having a heating value significantly greater than that required for its combustion. Each tank shown in Fig. 1 represents one or more sources of liquid wastes or storage zones, and merely depicts a source of three different waste liquids. The liquid in each tank may contain suspended solids and, although one advantage of this invention lies in the mixing of liquids in the combustion chamber, the invention includes the use of a mixture of liquids as one or more streams. The liquid from waste tanks 1, 2 and 3, respectively, flows through lines 7, 8 and 9, valves 4, 5 and 6, filters 10, 11 and 12, and pumps 13, 14 and 15 to control valves 19, 20 and 21.

The valves 4, 5 and 6 are provided as a means for isolating the liquids in the tanks from the rest of the system, such as may be necessary during maintenance of the system, and normally are open. These valves may be any conventional commercially available valves which are compatible with the liquid wastes.

The filters 10, 11 and 12 may be commercially available filters for separating solids from liquids and are provided to remove particulate solids from the waste streams which may be large enough to clog the injectors if present in the streams passing into the burner. The filters preferably have the capability of removing particles larger than 0.635 cm, and most preferably particles larger than 0.3175 cm in diameter. Other solids-liquid separation devices such as centrifuges or hydroclones may be used. However, filters are preferred.

The pumps 13, 14 and 15 are provided to pressurize the liquid waste streams and force them into the burner through the injectors. Conventional commercially available centrifugal or positive displacement pumps compatible with the liquid wastes and having the requisite pressure and volumetric capabilities may be used.

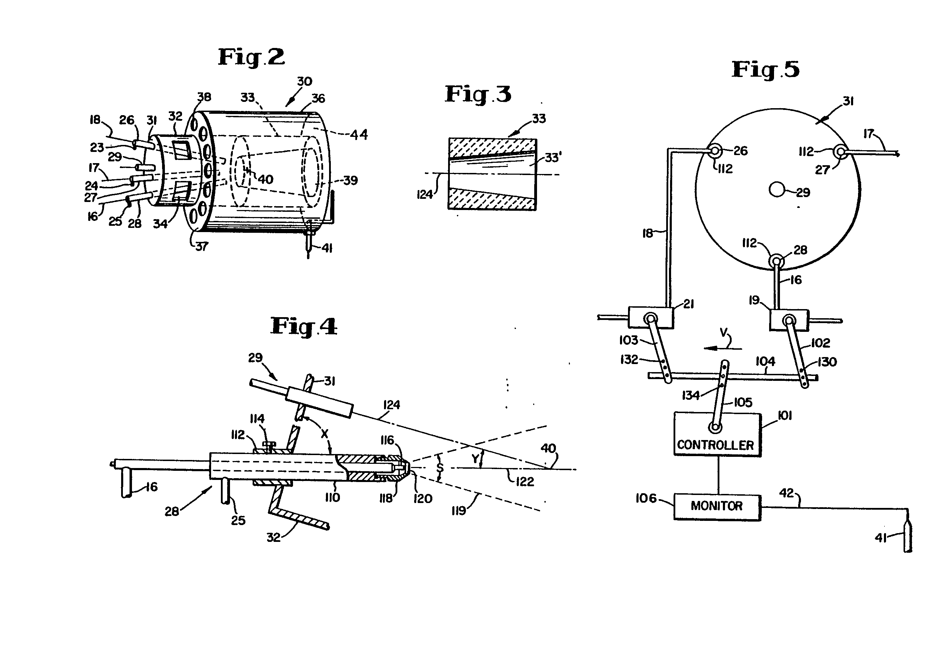

The relative quantities of liquids passing through lines 7, 8 and 9 are controlled at valves 19, 20 and 21, to provide a stable flame at a temperature in the burner high enough to ensure essentially complete combustion. The liquid wastes pass from valves 19, 20 and 21 through lines 16, 17 and 18, respectively, to injectors 28, 27 and 26 (see Fig. 2 and Fig. 5) respectively, where they are forced into the burning zone with pressurized air.

The valves 19 and 21 are preferably motorized and activated by sensors. Valve 20 may also be motorized and activated by sensors; however, since the liquid stream controlled by valve 20 has a heating value equal to or slightly greater than that required for combustion, changes in the rate of flow of waste from line 8 will not significantly affect the combustion characteristics of the mixture of liquid wastes. Typically useful valves for controlling the flow of wastes are exemplified by the 1813 motorized Sensitrol valve sold by North American Mfg. Co., the 12 TBV-M Motorized Butterfly valve sold by Pyronics, Inc., and Barber-Coleman valves available from the Barber-Coleman Company.

The extent to which the valves are open is controlled by sensors which are activated by signals transmitted from thermocouple 41 through electrical lines 42, 43 and 45. The thermocouples must be capable of withstanding and sensing temperatures as high as those encountered in the burner, and preferably as high as about 1427°C (2,600°F). Typical useful thermocouples are the Chromel-Alumel thermocouples sold by Omega Engineering which, with added shielding, may be used to temperatures as high as about 1427°C (2,600°F).

Other means of controlling the relative amounts of liquid wastes delivered to the injectors, such as devices to control pump speed, may be used and are within the scope of this invention.

The injectors 26, 27 and 28 (see Fig. 2) serve the functions of atomizing the liquid wastes so that they are more readily and completely combusted and directing the atomized, unconfined streams of liquid waste into the combustion zone. The preferred injector, an illustrative embodiment of which is shown in Fig. 4, is provided with means for mixing high pressure gas such as air or steam with the liquid waste. The Series 5622 oil atomizer available from North American Mfg. Co. exemplifies an injector structure which may be used.

As shown in Fig. 2, the injectors extend through a burner face plate 31 and are spaced apart and oriented so that the axes of the injectors define an imaginary cone having an apex 40 within an outwardly tapered combustion chamber 33' formed by the wall of a cylindrical refractory liner 33 carried within an inner burner shell 32. Preferably, apex 40 is located about 0 to 15 cms (0 to 6 inches), more preferably about 7.5 to 10 cms (3 to 4 inches), within the plane of the inlet opening into chamber 33' and substantially on the geometric center axis 124 of the chamber. The discharge ends of the injectors within shell 32 are preferably equally spaced apart by a distance in the range of about 10 to 15 cms (4—6 inches) and this distance is preferably adjustable by moving each injector along its longitudinal axis either away from or toward apex 40. For this purpose, the body 110 of each injector may be slidably mounted in a sleeve 112 carried by face plate 31 as shown in Fig. 4, a set screw 114 being provided to secure the injector at the axial position desired. The injectors are canted toward axis 124 such that the conical angle at apex 40 is about 40 to 80°, more preferably about 40 to 60°, most preferably about 46°.

As seen best in Fig. 2, the inner ends of injectors 26, 27 and 28 are spaced a substantial distance from liner 33 and do not extend into combustion chamber 33'. This avoids damage to the injector when the cooling flow of waste liquid is shut off while liner 33 is still hot because the heat initially retained by this liner can be at a sufficiently high level to melt a metallic nozzle within chamber 33' or otherwise in close proximity to the heated mass of the liner.

As shown in Fig. 4, the injectors include a waste nozzle 116 and a gas or steam nozzle 118, the latter comprising an atomizing nozzle and being adjustable and/or exchangeable so as to provide a conical spray 119 diverging radially outward from the axis of nozzle opening 120 at a preselected spray angle "S". Spray angle "S" is preferably in the range of about 15 to about 60 degrees, more preferably about 22.5 to about 45 degrees, 22.5 degrees being preferred for wastes of relatively low viscosity and 45 degrees being preferred for wastes of relatively high viscosity. The central axis 122 of the conical spray, which is an extension of the longitudinal axis of the elongated injectors, intersects the combustion chamber axis 124 at an angle "Y" preferably in the range of about 20 to 40 degrees, more preferably about 20 to 30 degrees, most preferably about 23 degrees. Combustion chamber axis 124 preferably coincides with the axis of pilot burner 29 as shown in Fig. 4 and both of these axes preferably lie on the geometric center axes of cylindrical inner shell 32 and cylindrical outer shell 36.

The injector arrangement described insures formation of a combustible mixture within chamber 33' in the area of apex 40 while maintaining the atomizing nozzles at a sufficient distance from liner 33 to avoid damaging the injectors during normal or emergency shutoff of waste flow. In order to achieve the foregoing spray intersection angles, injector body 110 and its associated mounting sleeve are mounted at an angle "X" relative to the plane of face plate 31, angle "X" preferably being in the range of 50 to 70 degrees, more preferably 60 to 70 degrees, most preferably about 67 degrees.

Pilot burner 29, shown in Fig. 2 and Fig. 4, also extends through face plate 31, and is provided with a source of gas or oil (not shown). The pilot burner sends a flame through the apex of the imaginary cone defined by the converging waste streams and thus ignites the liquid waste mixture formed by these streams in the immediate area of the cone apex.

Air for ignition and initial burning of the atomized liquid, referred to as primary air, flows into the combustion zone through louvered openings 34 in inner shell 32 of burner 30.

Means (not shown) are provided for adjusting the size of the openings 34, and thus the rate of air admitted to the combustion zone.

The combustion products passing from the burner assembly 30 are contacted at exit end 39 of the burner assembly with additional air, referred to as secondary air. This air enters the burner assembly through louvered ports 38 in annular end closure 37 and flows in the annular passageway between the inner shell 32 and outer shell 36 toward the end 39. Adjacent end 39, the secondary air flows concentrically around the still burning core of combustible materials emitted from chamber 33', causing the flame pattern to expand and fill the drum of a rotary kiln 50. The rate of air flow through ports 38 may be controlled by the use of an annular face plate (not shown) having holes to register with those of plate 37 when rotated. The combustion flame passing into rotary kiln 50 is contacted with additional air, referred to as tertiary air, flowing into the system between shield 53 and end wall 54. The resulting combustion products then pass into a stationary combustion product retention chamber 55 having a friction seal 58 in sliding contact with an outer shell 52 of kiln 50. The rotary kiln comprises an outer shell 52 and refractory lining 51. The retention chamber 55 comprises outer shell 56 and refractory material 57. Outer shelles 32, 36, 52 and 56 are preferably cylindrical in shape and made of metallic material.

The rotary kiln 50 and retention chamber 55 are sized to provide a sufficient hold-up time for the combustion products to ensure substantially complete combustion. The refractory material in the burner 30, kiln 50 and retention chamber 55 serves not only to protect the outer metallic shell of the unit but also to maintain a sufficiently high temperature so that the combustion products will be retained at an elevated temperature to thereby complete combustion.

Thermocouples 46 and 47 in the retention chamber and the rotary kiln respectively are for monitoring the temperature and thus the conditions within the combustion gas retention zones. Electrical lines 48 and 49 lead from these thermocouples to devices to record the temperatures and/or control the process as by shutting down the system if required conditions are not being met. These, or additional thermocouples, may be placed at various locations in the system, the number and their placement determined by anticipated needs of the system.

The combustion products pass from the retention chamber 55 into inlet 61 of venturi 60 where they are mixed with a stream of water forced into the throat 62 of venturi from pump 93. The resulting mixture of atomized water and hot gases leaves the venturi 60 through outlet 63 and passes into tower 71.

The combustion gases pass upwardly through the tower through packing 72 and 73 and water sprays from sprayers 79 and 80 pumped into the tower by pump 94 through lines 95, 78 and 77. The scrubbed gases pass upwardly in the tower through demisters 74 and 75 and are forced out by fan 76. The liquid in the tower carrying suspended particles and dissolved impurities flows into settling pond 90 through line 97, and clarified water is recycled to pumps 93 and 94 through lines 91 and 92, respectively.

Referring to Fig. 2, liquid wastes are introduced into injectors 26, 27 and 28. The streams emitted from the nozzles of these injectors converge at a point where they are contacted with a flame from pilot burner 29. As noted above, primary air is introduced into the combustion zone through louvered ports 34 in the inner shell 32 of burner 30.

Secondary air to complete the combustion of the gases formed in the combustion zone passes through louvered ports 38 in annular end closure 37 which extends between inner shell 32 and outer shell 36. This air, in passing through the annular zone formed between shells 32 and 36, raises the temperature of the air and thus helps achieve more complete combustion as it contacts the hot combustion gases at the exit end 39 of the burner.

Fig. 3 shows a cross-section of refractory liner 33 within the burner.

Fig. 4 shows a simplified structure for burner injector 28 having waste line 16 and pressurized air line 25.

Fig. 5 is a schematic diagram of a system for controlling the ratio between flow rate of low heat value waste and flow rate of high heat value waste introduced into the burner. Temperature monitor 106, responsive to thermocouple 41, causes controller 101 to adjust valves 19 and 21 through linkage means 102, 103, 104 and 105. Movement of these linkages in the direction of arrow V increases the flow of high heat value waste thorough line 18 to injector 26 and decreases the flow of low heat value waste through line 16 to injector 28. A first series of apertures 130 and a second series of apertures 132 in linkages 102 and 103, respectively, permit adjustments in the lengths of the lever arms through which linkage 104 acts to rotate the stems of valves 19 and 21, respectively. These adjustments provide for variations in the amount of flow rate change provided by each valve in response to a given amount of axial movement by linkage 104. Similarly, a third series of apertures 134 in linkage 105 permits adjustments in the amount of axial movement imparted to linkage 104 by a given amount of pivotal movement by linkage 105. Each of these adjustments provide means for fine tuning the system for controlling relative to each other the rates of injecting the low and high heat value liquids into the combustion zone, depending upon the relative heat values of those liquids and their viscosities and other physical characteristics.

In carrying out the process of this invention, the three waste streams are injected at relatively high pressure, e.g., $6.89 \times 10^5$ Pa (100 psi), into the burner, the relative amounts of each stream being controlled by the control means so that the resulting mixture has a BTU content at or above the point at which the mixture will burn without an external source of energy. In the preferred method of carrying out this invention the rate of air flow and relative amounts of each waste stream are adjusted manually until the desired temperature and combustion conditions are reached and then the control means, when activated by a sensor such as a thermocouple is used to maintain this condition.

In order to prolong the life of the refractory materials in the burner kiln and retention chamber, the burner is preferably operated at as low a temperature as is consistent with regulatory requirements. The refractory material preferably contains at least about 90 wt% alumina and is able to withstand temperatures at least as high as 1649°C (3,000°F) for at least short periods of time.

Some hazardous wastes must be burned at a minimum temperature. For example EPA regulations require at least 1093°C (2,000°F) and a retention time of at least 2 seconds at that temperature for combustion of PCB.

Although it is preferred that the temperature be at or below about 1149°C (2,100°F), the temperature may periodically be raised to temperatures as high as 1371°C (2,500°F) to rid the combustion chamber and kiln of accumulated deposits of solid slags. It is preferred that the temperatures not exceed about 1427°C (2,600°F) since the life of the refractories is reduced significantly as the temperature is raised above about 1427°C (2,600°F) even for short periods of time.

Referring to Figs. 1 and 2, air flows into the combustion chamber and into contact with liquid wastes and combustion products by four routes. Atomization air atomizes the liquid wastes as they are discharged from the respective injectors. Primary air initiates the combustion by contacting the atomized liquid wastes at the apex of the imaginary cone and enters the combustion chamber through louvered ports 34 in the inner shell 32 of burner 30. The area of openings 34, and thus the rate of air flow through the openings, is controlled by means (not shown) for adjusting the size of these openings. Additional air is brought into contact with the combustion products downstream from burner liner 33. This air, referred to as secondary air, enters the burner 30 through louvered ports 38 in the annular chamber between the outer shell 36 and inner shell 32 of burner 30. Secondary air contacts the combustion products at the exit end of burner 30. The control of air through louvers 38 is affected by means (not shown) for adjusting the size of these ports. Yet additional air, referred to as tertiary air, is introduced into the system through the space between the burner and the rotary kiln defined by burner shield 53 and end wall 54 of kiln 50.

The amount of tertiary air may be regulated by adjusting the space between shield 53 and end wall 54 by axially moving the burner with respect to the rotary kiln. The quantity of air needed for complete combustion of a given volume of liquid waste changes as the heating value of the liquid changes. A liquid having a heating value of about $3.34 \times 10^7$ J per litre (120,000 BTU per gallon) will require about 12 $m^3$ per litre (1,620 $ft^3$ per gallon) at standard temperature and pressure for complete combustion. An excess of at least about 20 percent is preferred.

The pilot burner to initiate the burning preferably burns continuously at a heat output sufficiently high to initiate the burning and restart it in the event the flame goes out. A constant heat output of about $2.5 \times 10^8$ J (240,000 BTU's) per hour has been found to be satisfactory.

In starting the process of burning liquid wastes, the temperature may first be adjusted to the desired value, such as about 1104°—1121°C (2,020°F to 2,050°F) depending on the instrument error of the control system, by manually regulating liquid waste flow and air flow rates. Once the operating temperature is reached the automatic controller may be set at that temperature. In the preferred method of carrying out the invention, fluid controller in response to automatic control are used on either one or both of the essentially non-combustible and the very combustible liquid streams. A controller on the intermediate energy content waste stream which has an energy (BTU) value which is equal to or slightly greater than that required to support combustion will normally serve no function since changes in the volume of the stream usually will not affect the combustibility of the mixture to a significant extent. The intermediate BTU stream functions primarily to provide an essentially stable flame to maintain the desired temperature level.

In carrying out this process, the low energy liquid waste may have a heat or energy value from about 0 to $2.23 \times 10^7$ J per litre (about 0 to 80,000 BTU per gallon), preferably from about $2.7 \times 10^6$ to $1.67 \times 10^7$ J per litre (10,000 to 60,000 BTU per gallon). The intermediate energy liquid waste may have a heat value in the range from a value which is capable of supporting combustion to one which is slightly higher, i.e. from about $2.5 \times 10^7$ to $2.79 \times 10^7$ J per litre (90,000 to 100,000 BTU per gallon), preferably about $2.79 \times 10^7$ J per litre (100,000 BTU per gallon). The high heat or energy liquid waste (or, optionally, liquid fuel if liquid waste of the requisite fuel value is not available) has an energy value at least about $2.79 \times 10^6$ J per litre (10,000 BTU per gallon) greater than the intermediate energy liquid waste, and is preferably in the range from about $3.34 \times 10^7$ to $3.62 \times 10^7$ J per litre (120,000 to 130,000 BTU per gallon).

The system is preferably operated continuously to minimize destruction of the refractory liners through expansion and contraction resulting from changes in temperature.

Illustrative Example

A burner system as shown in the figures is used to burn liquid wastes. The cylindrical inner shell 32 of the burner is about 76.2 cm (30 inches) in diameter, about 117 cm (46 inches) long and made of 4.76 mm (3/16 inch) hot rolled sheet steel. The refractory liner 33 is made from a moldable refractory composition containing about 90 wt % alumina, such as available from General Refractory, Inc. The molded liner is about 61 cm (24 inches) long, about 75 cm ($29\frac{1}{2}$ inches) in diameter, about 18.5 cm ($7\frac{1}{4}$ inches) thick at the inlet and about 10.2 cm (4 inches) thick at the outlet. The combustion chamber formed by this liner has an inlet opening about 38 cm (15 inches) in diameter and an outlet opening about 54.6 cm ($21\frac{1}{2}$ inches) in diameter. The louvers in the inner shell have a maximum open area of about 839 cm² (130 square inches).

The injectors mounted on face plate 31 are about 91.5 cm (three feet) long, and have a waste nozzle 116 with an internal diameter of about 1.6 cm ($\frac{5}{8}$ inch). They are oriented so that their axes converge substantially on the axis of cylindrical inner shell 32 at a point about 7.6 to 10.2 cm (3 to 4 inches) within the entrance to combustion chamber 33' in refractory liner 33. Each injector mounting sleeve is positioned so that the longitudinal axis 122 of the injector is slanted inward toward the inner shell axis 124 at an angle of about 67° relative to the plane of face plate 31 and the central axis of the spray emitted by the injector converges towards apex 40 at an angle of about 23° relative to the inner shell axis. The injectors are adjusted axially and clamped in their corresponding sleeves so that the tips of atomizing nozzles 118 (on axis 122) are about 10.2 to 15.2 cm (4 to 6 inches) apart, each nozzle being axially adjusted within this range so as to achieve a centrally positioned and relatively uniform flame shape downstream of apex 40. In this position, the tip of each nozzle is about 6.35 to 8.89 cm ($2\frac{1}{2}$ to $3\frac{1}{2}$ inches), more preferably about 7.62 cm (3 inches) from shell axis 124 and about 11.43 to 13.97 cm ($4\frac{1}{2}$ to $5\frac{1}{2}$ inches), more preferably about 12.7 cm (5 inches) from the closest boundary of the refractory mass comprising the body of insert 33 (about 5.08 to 6.35 cm (2 to $2\frac{1}{2}$ inches) outside of the plane of the entrance opening to chamber 33' but spaced along a diagonal line about 11.43 to 13.97 cm ($4\frac{1}{2}$ to $5\frac{1}{2}$ inches) from the mass defining the edge of this opening.

Pilot burner 29 is directed substantially along axis 124 of inner shell 32 so that its flame passes through the point of convergence of the injector axes, i.e. apex 40. The pilot burner is gas fired and has an energy input of about $25.3 \times 10^7$ J (240,000 BTU) per hour.

The outer shell 36 is about 102 cm (40 inches) in diameter and 91.5 cm (36 inches) long, having an outlet end 39 approximately even with the outlet of the combustion chamber 33'. The louvers in the annular end 37 between outer shell 36 and inner shell 32 have a maximum open area of about 0.145 m² (225 square inches).

The rotary kiln is about 488 cm (16 feet) long and 244 cm (8 feet) in diameter and has a 1,649°C (3,000°F) refractory lining about 23 cm (9 inches) thick. The retention chamber is about 976 cm (30 feet) long, about 610 cm (20 feet) in diameter and is provided with a 1,649°C (3,000°F) refractory lining about 33 cm (13 inches) thick.

In starting the incinerator burner, the pilot burner is started and liquid waste having an energy value of about $2.79 \times 10^7$ J per litre (100,000 BTU per gallon) is introduced first into the combustion zone through injector 27 at a rate of about 757 litres (200 gallons) per hour, thus initiating burning. Thereafter, waste liquid having energy value of about $3.6 \times 10^7$ J per litre (130,000 BTU per gallon) is introduced into the burner through injector 26 at a rate of about 2270 litres (600 gallons) per hour; and waste liquid having an energy value of about $2.7 \times 10^6$ J per litre (10,000 BTU per gallon) is introduced into the burner through injector 28 at a rate of about 757 litres (200 gallons) per hour. The wastes are introduced into the injectors at $172 \times 10^3$ Pa (25 psia) and air at a pressure of $690 \times 10^3$ Pa (100 psia) is introduced into all injectors to atomize the liquids and force them into the combustion zone.

The combustion air flow into the combustion chamber and areas between the combustion chamber and the rotary kiln is adjusted by manually moving the louvers and adjusteing the axial position of the burner relative to the rotary kiln. The louvers are about 90 percent open at the operating temperatures. When the desired temperature of about 1,104°C (2,020°F) is reached the valve controller for the $2.7 \times 10^6$ J per litre (10,000 BTU) and $3.6 \times 10^7$ J per litre (130,000 BTU) streams is activated, thus providing means for automatically adjusting the flow rate of these streams in response to signals from a thermocouple located in the combustion zone to maintain the temperature above about 1,093°C (2,000°F). A drop in temperature causes the controllers to adjust the valve openings to increase the rate of flow of high energy content liquid waste and decrease the rate of flow of low energy content waste, thus increasing the ratio of volume of the high energy content stream to the low energy content stream. An increase in temperature causes the controller to change the value openings to decrease that ratio.

The overall burning rate is about 1.05×10$^{11}$ J (100,000,000 BTU) per hour for a liquid waste disposal rate of about 3,785 litres (1,000 gallons) of liquid waste per hour, and the combined retention time of the combustion products in the burner, kiln and retention chamber at a temperature of about 1,093°C (2,000°F) is about 4 seconds.

Means are provided for shutting down the system if the temperature increases or decreases outside a predetermined range. These means are responsive to thermocouples within the burner, kiln and retention chamber. Failure to shut down the system if the temperature were to drop too low may result in failure to meet regulatory emission requirements. Too high a temperature may result in damage to equipment.

## Claims

1. A burner for combustion of liquid wastes comprising:

wall means (33) defining a combustion zone (33');

injection means comprising first (28), second (27) and third (26) injectors for separately injecting streams of waste liquid into said combustion zone;

means (4—18, 22—15) for introducing first (1), second (2) and third (3) waste liquids of different energy values to said first (28), second (27) and third (26) injectors, respectively, said first waste liquid having an energy value below that required for combustion, said second waste liquid having an energy value at least high enough to support combustion, and said third waste liquid having an energy value significantly greater than said second waste liquid;

gas supply means (34) for supplying a primary combustion-supporting gas to said combustion zone;

means (29) for igniting the injected waste streams within said combustion zone (33'); and

means (39) for emission of combustion products from said combustion zone (33'); wherein

said first (28), second (27) and third (26) injectors are positioned in spaced apart relationship to each other outside said combustion zone (33') and oriented relative to each other and said wall means (33) so that said streams of waste liquids are injected into the combustion zone as separate unconfined streams (119) converging toward a common point (40) within said combustion zone (33'), the axes of said unconfined streams lying on a common surface defined by an imaginary cone having its apex coincident with said common point (40), whereby said waste liquids are mixed in the immediate area of said common point (40) and the mixed waste liquids then move as a stream confined by said wall means (33) towards said emission means (39); and wherein

the burner further comprises control means (101) for controlling the rate of injecting at least one of said first (1) and third (3) waste liquids relative to the rate of injecting the other of said first (1) and third (3) waste liquids so that said confined stream is a combustible mixture of said waste liquids which when ignited by said igniting means (29) sustains combustion within said combustion zone (33') independently of said igniting means (29), said control means (101) including means (41, 42, 106) for measuring at least one characteristic of the combustion products related to combustion conditions and means (19, 21) responsive to said characteristic(s) for controlling said rate of injecting at least one of said first (1) and third (3) waste liquids into said combustion zone (33').

2. A burner according to Claim 1, wherein said wall means (33) forms an elongate combustion chamber having a single inlet opening for introducing said first, second and third unconfined waste streams (119) into said combustion zone (33'), and means (31, 112, 114) are provided for mounting said injectors (26, 27, 28) opposite to said inlet opening such that the axes (122) of said unconfined streams (119) intersect the axis (124) of said combustion chamber substantially at said common point (40).

3. A burner according to Claim 2, wherein said igniting means (29) comprises burner means for providing an elongated flame, and means (31) are provided for mounting said burner means such that said elongated flame is directed along the axis (124) of said combustion chamber and passes through said common point (40).

4. A burner according to any one of Claims 1—3, wherein the discharge end (120) of said injectors are substantially equally spaced from each other.

5. A burner according to any one of Claims 1—4, wherein said emission means comprises an outlet opening (39) for emission of combustion products from said combustion zone (33'), and said gas supply means includes secondary means (38, 44) for bringing combustion supporting gas into contact with said combustion products adjacent to said outlet opening (39) from said combustion zone.

6. A burner according to any one of Claims 1—5, wherein said wall means (33) includes an inner wall (32, 33) defining said combustion zone (33') and an outer wall (36) surrounding at least a portion of said inner wall and forming an annular zone comprising a passageway (44) for air to pass around said inner wall and contact said combustion products adjacent to an outlet opening (39) from said combustion zone (33').

7. A burner according to any one of Claims 1—6, wherein said control means (101) comprises means (41) for measuring the temperature of combustion products within said combustion zone, and means (19, 21) responsive to said temperature for controlling said rate of injecting at least one of said first (1) and third (3) waste liquids into said combustion zone (33').

8. A burner according to any one of Claims 1—7, wherein means (50, 55) is provided for maintaining the temperature of the combustion products at a temperature sufficiently near the temperature existing within said combustion zone (33') for a period of time sufficiently long to substantially complete conversion of said waste liquids to environmental innocuous products.

9. A burner according to any one of Claims 1—7, wherein means (50, 55) is provided for maintaining the temperature of the combustion products above at least 1,093°C (2,000°F) for at least 2 seconds.

10. A burner according to Claim 8 or Claim 9, wherein said means for maintaining the temperature of the combustion products comprises a rotary kiln (50) having an inlet (54) in communication with an outlet opening (39) from said combustion zone (33').

11. A burner according to any one of Claims 1—10, wherein said control means (101) includes means (19, 21, 102—105) for controlling the rate of injecting both of said first (1) and third (3) waste liquids in response to said measured characteristic(s).

12. A process for burning liquid wastes, comprising:

providing a first liquid waste having an energy value below that required for combustion a second liquid waste having an energy value sufficiently high to support combustion, and a third liquid waste having an energy value significantly greater than that of said second liquid waste;

separately injecting said first, second and third liquid wastes into a combustion zone as separate unconfined streams converging toward a common point within said combustion zone, said streams being injected along axes lying substantially on a common surface defined by an imaginary cone having its apex coincident with said common point and being directed toward said common point from outside of said combustion zone and oriented so as to form a mixture of said liquid wastes in the immediate area of said common point;

adjusting the rate of flow of at least one of said first and third streams so that said liquid waste mixture is combustible;

introducing combustion-supporting gas into said combustion zone;

igniting said liquid waste mixture;

measuring at least one characteristic of the combustion products; and

controlling the rate of flow of at least one of said first and third streams in response to said measured characteristic(s).

13. A process according to Claim 12, further characterized in that said separate unconfined streams are injected through a single inlet opening at one end of an annular wall around at least a portion of said combustion zone, and in that said liquid waste mixture is ignited by an elongated flame directed along the axis of said imaginary cone and passing through said apex.

14. A process according to Claim 12 or Claim 13, further characterized in that the measured characteristic is temperature and the rate of flow of said first stream is controlled in response to said temperature.

15. A process according to any one of Claims 12—14, further characterized in that the measured characteristic is temperature and the rate of flow of said third stream is controlled in response to said temperature.

16. A process according to any one of Claims 12—15, further characterized in that the measured characteristic is the temperature of combustion products within said combustion zone.

17. A process according to any one of Claims 12—16, further characterized in that a major portion of said first liquid waste is water.

18. A process according to any one of Claims 12—17, further characterized in that said first waste liquid has an energy value of from 0 to $2.23 \times 10^7$ J per litre (0 to 80,000 BTU per gallon), and said third waste liquid has an energy value of at least $2.27 \times 10^6$ J per litre (10,000 BTU per gallon) greater than the energy value of said second waste liquid.

19. A process according to any one of Claims 12—18, further characterized in that said first liquid waste has an energy value from about $2.7 \times 10^6$ to $1.67 \times 10^7$ J per litre (10,000 to 60,000 BTU per gallon), said second liquid waste has an energy value in the range from about $2.5 \times 10^7$ to $3.1 \times 10^7$ J per litre (90,000 to 110,000 BTU per gallon), and said third liquid waste has an energy value of at least about $3.34 \times 10^7$ J per litre (120,000 BTU per gallon).

**Patentansprüche**

1. Brenner für die Verbrennung von Flüssigabfall bestehend aus:

den Verbrennungsbereich (33') bestimmende Wandungen (33), Einspritzeinrichtungen mit einem ersten (28), zweiten (27) und dritten (26) Injektor zum getrennten Einspritzen von Strömen aus Abfallflüssigkeit in den Verbrennungsbereich, Einrichtungen (4—18, 22—15) zum Einführen von einer ersten (1), zweiten (2) und dritten (3) Abfallflüssigkeit unterschiedlicher Energiewerte in den ersten (28), zweiten (27) bzw. dritten (26) Injektor, wobei die erste Abfallflüssigkeit einen unter dem für die Verbrennung erforderlichen Energiewert hat, die zweite Abfallflüssigkeit einer Energiewert hat, der zumindest hoch genug ist, die Verbrennung zu tragen, und die dritte Abfallflüssigkeit einen Energiewert hat, der bedeutend größer ist als der der zweiten Abfallflüssigkeit, einer Speise- oder Versorgungseinrichtung (34) für Gas, um ein primäres, die Verbrennung unterstützendes Gas dem Verbrennungsbereich zuzuführen, einer Einrichtung (29) zum Zünden der eingespritzten Abfallströme im Verbrennungsbereich (33') und einer Einrichtung (39), um die Verbrennungsprodukte aus dem Verbrennungsbereich (33') austreten zu lassen, und dadurch gekennzeichnet, daß der erste (28), zweite (27) und dritte (26) Injektor in räumlich getrennter Beziehung zueinander außerhalb vom Verbrennungsbereich (33') angeordnet und zueinander sowie gegenüber den Wandungen (33) so ausgerichtet sind, daß ihre Abfallsflüssigkeitsströme in den Verbrennungsbereich als getrennte unbegrenzte Ströme (119) eingespritzt werden, die zu einem gemeinsamen Punkt (40) innerhalb vom Verbrennungsbereich (33') konvergieren und deren Achsen auf einer gemeinsamen Oberfläche liegen, die bestimmt wird durch einen imaginären Konus, dessen Scheitelpunkt mit dem gemeinsamen Punkt (40) zusammenfällt, wodurch die Abfallflüssigkeiten im unmittelbarem Gebiet des gemeinsamen Punktes (40) gemischt und die gemischten Abfallflüssigkeiten dann als ein gemeinsamer, von den Wandungen (33) begrenzter Strom zur Abführ- oder Austrittseinrichtung (39) geleitet werden, und daß der Brenner darüber hinaus eine Steuer- oder Regeleinrichtung (101) zum Steuern des Betrags des Einspritzens zumindest einer der ersten (1) und der dritten (3) Abfallflüssigkeit gegenüber dem Betrag des Einspritzens der anderen ersten (1) und dritten (3) Abfallflüssigkeit aufweist, so daß der begrenzte Strom eine brennbare Mischung aus Abfallflüssigkeiten ist, die, wenn sie durch die Zündungseinrichtung (29) gezündet wird, die Verbrennung im Verbrennungsbereich (33') unabhängig von der Zündungseinrichtung (29) unterhält oder trägt, wobei die Steuer- oder Regeleinrichtung (101) Einrichtungen (41, 42, 106) zum Messen zumindest einer Verbrennungsproduktcharakteristik bezogen auf die Verbrennungsbedingungen und Einrichtungen (19, 21) aufweist, die auf die Charakteristik(en) zum Steuern des Betrag des Einspritzens zumindest einer der ersten (1) und der dritten (3) Abfallflüssigkeiten im Verbrennungsbereich (33') ansprechen.

2. Brenner nach Anspruch 1, dadurch gekennzeichnet, daß die Wandung (33) eine längliche Verbrennungskammer bildet, die eine einzige Auslaßöffnung zum Einführen des ersten, zweiten und dritten unbegrenzten Abfallstroms (119) in den Verbrennungsbereich (33') aufweist, und daß Einrichtungen (31, 112, 114) vorgesehen sind zum Einsetzen der Injektoren (26, 27, 28) gegenüberliegend von der Einlaßöffnung, so daß sich die Achsen (122) der unbegrenzten Ströme (119) mit der Achse (124) der Verbrennungskammer im wesentlichen am gemeinsamen Punkt (40) schneiden.

3. Brenner nach Anspruch 2, dadurch gekennzeichnet, daß die Einrichtung (29) zum Zünden eine Brennereinrichtung zur Schaffung einer länglichen Flamme und eine Einrichtung (31) aufweist, durch die die Brennereinrichtung so eingesetzt wird, daß die längliche Flamme längs der Achse (124) der Verbrennungskammer durch den gemeinsamen Punkt (40) gerichtet ist.

4. Brenner nach einem der vorhergehenden Ansprüche 1 bis 3, dadurch gekennzeichnet, daß die Austragsenden (120) der Injektoren im wesentlichen im gleichen Abstand von einander angeordnet liegen.

5. Brenner nach einem der vorhergehenden Ansprüche 1 bis 4, dadurch gekennzeichnet, daß die Ausstrahleinrichtung eine Auslaßöffnung (39) zum Ausstrahlen der Verbrennungsprodukte aus dem Verbrennungsbereich (33') aufweist und daß die Gasversorgungseinrichtung eine sekundäre Einrichtung (38, 44) besitzt, um das die Verbrennung unterhaltende Gas in der Nähe der Ausgangsöffnung (39) aus dem Verbrennungsbereich mit den Verbrennungsprodukten in Kontakt zu bringen.

6. Brenner nach einem der vorhergehenden Ansprüche 1 bis 5, dadurch gekennzeichnet, daß die Wandung (33) eine den Verbrennungsbereich (33') festlegende innere Wand (32, 33) und eine zumindest einen Teil der inneren Wand umgebende äußere Wand (36) umfaßt und eine ringförmige Zone bildet, die einen Durchgang (44) für Gas aufweist, das um die innere Wand geleitet wird und mit den Verbrennungsprodukten in der Nähe einer Ausgangsöffnung (39) aus dem Verbrennungsbereich (33') in Kontakt kommt.

7. Brenner nach einem der vorhergehenden Ansprüche 1 bis 6, dadurch gekennzeichnet, daß die Regeleinrichtung (101) eine Einrichtung (41) zum Messen der Temperatur der Verbrennungsprodukte innerhalb des Verbrennungsbereichs und auf diese Temperatur ansprechende Mittel (19, 21) zum Regeln oder Steuern des Einspritzbetrags zumindest einer ersten (1) und dritten (3) Abfallflüssigkeit im Verbrennungsbereich (33') aufweist.

8. Brenner nach einem der vorhergehenden Ansprüche 1 bis 7, dadurch gekennzeichnet, daß Einrichtungen (50, 55) vorgesehen sind zur Aufrechterhaltung der Temperatur der Verbrennungsprodukte bei einer Temperatur, die hinreichend nahe der im Verbrennungsbereich (33') bestehenden Temperatur liegt, während einer ausreichend langen Zeitspanne zur weitgehend vollständigen Umwandlung der Abfallflüssigkeiten in umweltunschädliche Produkte.

9. Brenner nach einem der vorhergehenden Ansprüche 1 bis 8, dadurch gekennzeichnet, daß Einrichtungen (50, 55) zur Aufrechterhaltung der Temperatur der Verbrennungsprodukte über zumindest 1 093°C (2 000°F) während einer Dauer von 2 Sekunden vorgesehen sind.

10. Brenner nach Anspruch 8 oder 9, daß als Einrichtung zum Aufrechterhalten der Temperatur der Verbrennungsprodukte ein Drehofen (50) verwendet wird, der einen Einlaß (54) hat, der mit einer Auslaßöffnung (39) aus dem Verbrennungsbereich (33') in Verbindung steht.

11. Brenner nach einem der vorhergehenden Ansprüche 1 bis 10, dadurch gekennzeichnet, daß die Regeleinrichtung (101) Einrichtungen (19, 21, 102—105) zum Regeln des Einspritzbetrags sowohl der ersten (1) und der dritten (3) Abfallflüssigkeit als Reaktion auf das (die) gemessene(n) charakteristische(n) Merkmal(e) aufweist.

12. Verfahren zum Verbrennen von Flüssigabfall, gekennzeichnet durch

Bereitstellen eines ersten Flüssigabfalls, der einen unter dem für die Verbrennung benötigten Energiewert hat, eines zweiten Flüssigabfalls, der einen für die Unterhaltung der Verbrennung ausreichend hohen Energiewert hat, und eines dritten Flüssigabfalls, der einen Energiewert hat, der bedeutend größer als der des zweiten Flüssigabfalls ist, getrenntes Einspritzen des ersten, zweiten und dritten Flüssigabfalls in den Verbrennungsbereich als zu einem gemeinsamen Punkt innerhalb des Verbrennungsbereichs konvergierende unbegrenzte Ströme, die längs Achsen eingespritzt werden, die im wesentlichen auf einer gemeinsamen Fläche liegen, die durch einen imaginären Konus bestimmt wird, dessen Scheitelpunkt mit dem gemeinsamen Punkt zusammenfällt, und die von außerhalb vom Verbrennungsbereich zum gemeinsamen Punkt geführt und so ausgerichtet werden, daß sie in dem unmittelbaren Gebiet des gemeinsamen Punktes ein Flüssigabfallgemisch bilden,

Einstellen des Durchflußbetrags zumindest eines ersten und dritten Stroms, so daß das Flüssigabfallgemisch brennbar ist,

Einführen von die Verbrennung unterstützenden Gas in den Verbrennungsbereich,

Zünden des Flüssigabfallgemischs,

Messen zumindest einer Verbrennungsproduktcharakteristik und

Regeln oder Steuern des Durchflußbetrages zumindest eines ersten und dritten Stroms als Reaktion auf die gemessene(n) Charakteristik(en).

13. Verfahren nach Anspruch 12, dadurch gekennzeichnet, daß die getrennten unbegrenzten Ströme durch eine einzelne Einlaßöffnung an einem Ende der ringförmigen Wand um zumindest einen Abschnitt des Verbrennungsbereichs herum eingespritzt werden und daß das Flüssigabfallgemisch von einer länglichen Flamme entzündet wird, die längs der Achse des imaginären Konus gerichtet wird und durch den Scheitelpunkt läuft.

14. Verfahren nach Anspruch 12 oder 13, dadurch gekennzeichnet, daß die gemessene Charakteristik die Temperatur ist und der Betrag des Durchflusses des ersten Stroms als Reaktion auf diese Temperatur geregelt wird.

15. Verfahren nach einem der vorhergehenden Ansprüche 12 bis 14, dadurch gekennzeichnet, daß die gemessene Charakteristik die Temperatur ist und der Betrag des Durchflusses des dritten Stroms als Reaktion auf diese Temperatur geregelt wird.

16. Verfahren nach einem der vorhergehenden Ansprüche 12 bis 15, dadurch gekennzeichnet, daß die gemessene Charakteristik die Temperatur der Verbrennungsprodukte innerhalb des Verbrennungsbereichs ist.

17. Verfahren nach einem der vorhergehenden Ansprüche 12 bis 16, dadurch gekennzeichnet, daß der Hauptteil des ersten Flüssigabfalls Wasser ist.

18. Verfahren nach einem der vorhergehenden Ansprüche 12 bis 17, dadurch gekennzeichnet, daß die erste Abfallflüssigkeit einen Energiewert von Null bis $2{,}23 \times 10^7$ J pro Liter (0 bis 80 000 BTU pro Gallone) und die dritte Abfallflüssigkeit einen Energiewert hat, der zumindest mit $2{,}27 \times 10^6$ J pro Liter (10 000 BTU pro Gallone) größer ist als der Energiewert der zweiten Abfallflüssigkeit.

19. Verfahren nach einem der vorhergehenden Ansprüche 12 bis 18, dadurch gekennzeichnet, daß der erste Flüssigabfall einen Energiewert von etwa $2{,}7 \times 10^6$ bis $1{,}67 \times 10^7$ J pro Liter (10 000 bis 60 000 BTU pro Gallone), der zweite Flüssigabfall einen Energiewert im Bereich von etwa $2{,}5 \times 10^7$ bis $3{,}1 \times 10^7$ J pro Liter (90 000 bis 110 000 BTU pro Gallone) und der dritte Flüssigabfall einen Energiewert von zumindest etwa $3{,}34 \times 10^7$ J pro Liter (120 000 BTU pro Gallone) hat.

**Revendications**

1. Brûleur pour la combustion d'incinération de déchets liquides, ce brûleur comprenant:

une paroi (33) délimitant une zone (33') de combustion;

un dispositif d'injection comprenant des premier (28), second (27) et troisième (26) injecteurs pour injecter séparément des courants de déchets liquides dans ladite zone de combustion;

des organes (4—18, 22—15) pour introduire des premier (1), second (2) et troisième (3) déchets liquides, ayant des pouvoirs calorifiques différents, dans lesdits premier (28), second (27) et troisième (26) injecteurs, respectivement, ledit premier déchet liquide ayant un pouvoir calorifique inférieur à celui nécessaire pour la combustion, ledit second déchet liquide ayant un pouvoir calorifique au moins assez élevé pour entretenir une combustion, et ledit troisième déchet liquide ayant un pouvoir énergétique nettement supérieur à celui dudit second déchet liquide;

un dispositif (34) d'alimentation en gaz, pour fournir un gaz d'entretien de combustion primaire à ladite zone de combustion;

un dispositif (29) pour allumer les courants de déchets injectés au sein de ladite zone (33') de combustion; et

un dispositif (39) pour l'émission des produits de combustion provenant de ladite zone (33') de combustion;

brûleur dans lequel lesdits premier (28), second (27) et troisième (26) injecteurs sont placés en étant espacés l'un par rapport à l'autre à l'extérieur de ladite zone (33') de combustion et étant orientés l'un par rapport à l'autre et par rapport à ladite paroi (33) de façon que lesdits courants de déchets liquides soient injectés dans la zone de combustion sous forme de courants (119) séparés et non confinés, qui convergent vers un point (40) commun au sein de ladite zone (33') de combustion, les axes desdits courants non confinés se situant sur une surface commune définie par un cône imaginaire dont le sommet coïncide avec ledit point commun (40), moyennant quoi lesdits déchets liquides sont mélangés dans la zone du voisinage immédiat dudit point (40) commun et les déchets liquides mélangés se déplacent alors sous forme d'un courant, confiné par ladite paroi (33), vers ledit dispositif (39) d'émission; et

le brûleur comprend en outre un dispositif (101) de commande pour commander et réguler le débit d'injection d'au moins l'un desdits premier (1) et troisième (3) déchets liquides par rapport au débit d'injection de l'autre desdits premier (1) et troisième (3) déchets liquides, de sorte que ledit courant confiné est un mélange combustible desdits déchets liquides qui, lorsqu'ils sont allumés par ledit dispositif (29) d'allumage, entretiennent la combustion au sein de ladite zone (33') de combustion indépendamment dudit dispositif (29) d'allumage, ledit dispositif (101) de commande et de régulation comprenant des organes (41, 42, 106) pour mesurer au moins une caractéristique des produits de combustion, liée aux conditions de combustion, et les organes (19, 21) sensibles à ladite ou auxdites caractéristiques pour commander et réguler ledit débit d'injection d'au moins l'un desdits premier (1) et troisième (3) déchets liquides dans ladite zone (33') de combustion.

2. Brûleur selon la revendication 1, dans lequel ladite paroi (33) forme une chambre allongée de combustion ayant une seule ouverture d'entrée pour l'introduction desdits premier, second et troisième courants (119) de déchets non confinés dans ladite zone (33') de combustion, et des organes (31, 112, 114) étant prévus pour monter lesdits injecteurs (26, 27, 28) en face de ladite ouverture d'entrée de sorte que les axes (122) desdits courants (119) non confinés intersectent l'axe (124) de ladite chambre de combustion sensiblement audit point (40) commun.

3. Brûleur selon la revendication 2, dans lequel ledit organe (29) d'allumage comprend des organes de brûleur pour fournir une flamme allongée, et des organes (31) sont prévus pour le montage desdits organes de brûleur, de sorte que ladite flamme allongée est dirigée le long de l'axe (124) de ladite chambre de combustion et passe par ledit point (40) commun.

4. Brûleur selon l'une quelconque des revendications 1 à 3, dans lequel les extrémités (120) de décharge desdits injecteurs sont sensiblement équidistantes les unes des autres.

5. Brûleur selon l'une quelconque des revendications 1 à 4, dans lequel ledit dispositif d'émission comprend une ouverture (29) de sortie pour l'émission des produits de combustion provenant de ladite zone (33') de combustion, et ledit dispositif d'alimentation en gaz comprend des organes (38, 44) secondaires pour mettre le gaz destiné à entretenir la combustion en contact avec lesdits produits de combustion près de ladite ouverture (39) de sortie de ladite zone de combustion.

6. Brûleur selon l'une quelconque des revendications 1 à 5, dans lequel ladite paroi (33) comprend une paroi interne (32, 33) délimitant ladite zone (33') de combustion et une paroi (36) externe entourant au moins une partie de ladite paroi interne et formant une zone annulaire comprenant un passage (44) pour permettre à l'air de passer autour de ladite paroi interne et pour venir au contact desdits produits de combustion près d'une ouverture (39) de sortie de ladite zone (33') de combustion.

7. Brûleur selon l'une quelconque des revendications 1 à 6, dans lequel ledit dispositif (101) de commande comprend un organe (41) pour mesurer la température des produits de combustion au sein de ladite zone de combustion, et des organes (19, 21) sensibles à ladite température pour réguler ledit débit d'injection d'au moins l'un desdits premier (1) et troisième (3) déchets liquides dans ladite zone (33') d'injection.

8. Brûleur selon l'une quelconque des revendications 1 à 7, dans lequel des organes (50, 55) sont prévus pour maintenir la température des produits de combustion à une valeur suffisamment proche de la température existant au sein de ladite zone (33') de combustion pendant une période de temps assez longue pour achever quasi-totalement la conversion desdits déchets liquides en des produits inoffensifs pour l'environnement.

9. Brûleur selon l'une quelconque des revendications 1 à 7, dans lequel des organes (50, 55) sont prévus pour maintenir la température des produits de combustion au-dessus d'au moins 1093°C (2000°F) pendant au moins 2 s.

10. Brûleur selon les revendications 8 ou 9, dans lequel lesdits organes destinés à maintenir la température des produits de combustion comprennent un four (50) rotatif ayant une entrée (54) qui communique avec une ouverture (39) de sortie de ladite zone (33') de combustion.

11. Brûleur selon l'une quelconque des revendications 1 à 10, dans lequel ledit dispositif (101) de commande comprend des organes (19, 21, 102—105) pour commander et réguler le débit d'injection dudit premier (1) déchet liquide aussi bien que du troisième (3) déchet liquide, en réponse à la dite ou auxdites caractéristiques mesurées et en fonction de ces caractéristiques.

12. Procédé pour brûleur des déchets liquides, ce procédé comprenant:

la fourniture d'un premier déchet liquide ayant un pouvoir calorifique ou énergétique inférieur à celui nécessaire pour la combustion, la fourniture d'un second déchet liquide ayant un pouvoir calorifique suffisamment élevé pour entretenir une combustion, et la fourniture d'un troisième déchet liquide ayant un pouvoir énergétique ou calorifique nettement supérieur à celui dudit second déchet liquide;

l'injection, séparée, desdits premier, second et troisième déchets liquides dans une zone de combustion, sous forme de courants séparés et non confinés convergeant vers un point commun situé dans ladite zone de combustion, et lesdits courants étant injectés le long d'axes se situant sensiblement sur une surface commune définie par un cône imaginaire dont le sommet coïncide avec ledit point commun et ces courants étant dirigés vers ledit point commun, à partir de l'extérieur de ladite zone de combustion et étant orientés de façon à former un mélange desdits déchets liquides dans la zone située au voisinage immédiat dudit point commun;

l'ajustement du débit d'écoulement d'au moins l'un desdits premier et troisième courants de façon que ledit mélange de déchets liquides soit combustible;

l'introduction, dans ladite zone de combustion, d'un gaz capable d'entretenir la combustion;

l'allumage dudit mélange de déchets liquides;

la mesure d'au moins une caractéristique des produits de combustion; et

la commande et la régulation du débit d'écoulement d'au moins l'un desdits premier et troisième courants en réponse de ladite ou desdites caractéristiques mesurées et en fonction de celles-ci.

13. Procédé selon la revendication 12, caractérisé en outre en ce que lesdits courants séparés, non confinés, sont injectés par l'intermédiaire d'une seule ouverture d'entrée à une extrémité d'une paroi annulaire entourant au moins une partie de ladite zone de combustion, et en ce que ledit mélange de déchets liquides est allumé par une flamme allongée dirigée le long de l'axe dudit cône imaginaire et passant par ledit sommet.

14. Procédé selon la revendication 12 ou la revendication 13, caractérisé en outre en ce que la caractéristique mesurée est la température, et le débit d'écoulement dudit premier courant est commandé et régulé en fonction de ladite température.

15. Procédé selon l'une quelconque des revendications 12 à 14, caractérisé en outre en ce que la caractéristique mesurée est la température, et le débit d'écoulement dudit troisième courant est commande et régulé en fonction de ladite température.

16. Procédé selon l'une quelconque des revendications 12 à 15, caractérisé en outre en ce que la caractéristique mesurée est la température des produits de combustion au sein de ladite zone de combustion.

17. Procédé selon l'une quelconque des revendications 12 à 16, caractérisé encore en ce qu'une proportion majeure dudit premier déchet liquide est de l'eau.

18. Procédé selon l'une quelconque des revendications 12 à 17, caractérisé en outre en ce que ledit premier déchet liquide a un pouvoir calorifique compris entre 0 et $2,23 \times 10^7$ J/l (0 à 80 000 BTU par gallon), et en ce que ledit troisième déchet liquide a un pouvoir calorifique supérieur d'au moins $2,27 \times 10^6$ J/l (10 000 BTU par gallon) à celui dudit second déchet liquide.

19. Procédé selon l'une quelconque des revendications 12 à 18, caractérisé en ce que ledit premier déchet liquide a un pouvoir calorifique compris entre environ $2,7 \times 10^6$ et $1,67 \times 10^7$ J/l (10 000 à 60 000 BTU par gallon), ledit second déchet liquide a un pouvoir calorifique compris entre environ $2,5 \times 10^7$ et $3,1 \times 10^7$ J/l (90 000 à 110 000 BTU par gallon), et ledit troisième déchet liquide a un pouvoir calorifique au moins égal à environ $3,34 \times 10^7$ J/l (120 000 BTU par gallon).

Fig. 1

WASTE TANK

FILTERS

RETENTION CHAMBER

ROTARY KILN

BURNER

SETTLING POND

PRESSURIZED AIR

AIR

A/R

# Fig.2

# Fig.3

# Fig.5

# Fig.4

EP 0 196 293 B1